# EUROPÄISCHE PATENTSCHRIFT

(11) **EP 1 586 868 B1**
(45) Veröffentlichungstag und Bekanntmachung des Hinweises auf die Patenterteilung: **07.03.2007**
(21) Anmeldenummer: 05007917.7
(22) Anmeldetag: 12.04.2005
(51) Int. Cl.: G01D 11/24

(54) **Positionssensoranordnung mit mehreren in einer Reihe angeordneten, magnetfeldsensitiven Sensoren, insbesondere Hall-Sensoren**
Position measuring device with a plurality of magnetic flux sensors, in particular Hall-sensors, arranged in a row
Dispositif de mesure de position avec plusieurs capteurs de champ magnétique, en particulier des capteurs Hall, disposés en file

(30) Priorität: 13.04.2004 DE 102004017899
(43) Veröffentlichungstag der Anmeldung: 19.10.2005
(73) Patentinhaber: Festo AG & Co., 73734 Esslingen (DE)
(72) Erfinder: Reiniger, Thomas, Dr., 73249 Wernau (DE); Welker, Florian, 73061 Ebersbach (DE); von Zeppelin, Matthias, 73669 Lichtenwald (DE)
(74) Vertreter: Vetter, Hans

(56) Entgegenhaltungen:
- EP-A- 1 037 021
- US-A1- 2003 067 297

## Beschreibung

Die Erfindung betrifft eine Positionssensoranordnung mit mehreren in einer Reihe angeordneten, magnetfeldsensitiven Sensoren, insbesondere Hall-Sensoren, wobei ein mit einem Permanentmagneten versehenes bewegbares Element parallel zur Längsrichtung der Sensorreihe bewegbar ist, und wobei die Sensoren an eine Signalaufbereitungs- und/oder -auswerteeinrichtung angeschlossen sind zur Erfassung der Position des bewegbaren Elements.

Eine derartige, z.B. aus der DE 3443176 C1 oder US 2003/067297 A1 bekannte Positionssensoranordnung ermöglicht eine sehr exakte Positionsmessung. Dabei wird jedem Sensor der Sensorreihe ein bestimmter Positionswert zugeordnet, der beispielsweise einem bestimmten Ausgangssignal des jeweiligen Sensors mit dem Wert null oder einem anderen charakteristischen Wert entspricht. Weiter werden Spannungen von benachbarten Sensoren zueinander ins Verhältnis gesetzt, und bei Erreichen bestimmter Spannungsverhältnisse werden diese Spannungen bestimmten Positionen zugeordnet. Es ergibt sich dabei eine nahezu lineare Abhängigkeit der verknüpften Spannungssignale der Sensoren von der Position. Entsprechend der Länge der Sensorreihe kann somit über diese Länge die Position des bewegbaren Elements sehr exakt festgestellt werden.

Will man dieses bekannte Positionsmessprinzip bei Linearantrieben verwenden, so liegen konstruktive Probleme darin, bei verstellbarer Sensorreihe ein starkes Messsignal zu erhalten.

Eine Aufgabe der Erfindung besteht somit darin, eine Positionssensoranordnung der eingangs genannten Gattung so für Linearantriebe auszubilden, dass bei leichter Verstellbarkeit des Messbereichs die Sensorreihe möglichst nahe an der Bewegungsbahn des mit einem Permanentmagneten versehenen bewegbaren Elements angeordnet ist.

Diese Aufgabe wird erfindungsgemäß dadurch gelöst, dass ein Sensorgehäuse einen leistenartigen Gehäusevorsprung besitzt, der zur Aufnahme in einer längs eines Linearantrieb-Gehäuses verlaufenden Führungsnut vorgesehen ist, dass eine langgestreckte leistenartige Leiterplatte in diesem Gehäusevorsprung in dessen Längsrichtung angeordnet ist oder in diesen eingreift und die Sensorreihe in diesem Gehäusevorsprung hält, und dass der Permanentmagnet am angetriebenen Element des Linearantriebs angeordnet ist.

Die Vorteile der erfindungsgemäßen Positionssensoranordnung bestehen insbesondere darin, dass der leistenartige Gehäusevorsprung zum einen als Führungselement zum problemlosen Verschieben des Sensorgehäuses in einer Führungsnut des Linearantrieb-Gehäuses dient und zum anderen die Sensorreihe aufnimmt, die dadurch in der Nut angeordnet ist, also in Bezug auf die Gehäuse-Außenfläche näher am angetriebenen Element. Dies bewirkt eine Verbesserung der Wechselwirkung zwischen Magnetfeld und Sensorik. Die Sensoren sind dabei an einer Leiterplatte angeordnet und können dadurch auf einfache Weise im leistenartigen Gehäusevorsprung eingesetzt und mittels der Leiterplatte fixiert werden. Die Montage und gegebenenfalls ein Auswechseln der Sensoren ist dadurch auf einfache Weise möglich.

Durch die in den Unteransprüchen aufgeführten Maßnahmen sind vorteilhafte Weiterbildungen und verbesserungen der im Anspruch 1 angegebenen Positionssensoranordnung möglich.

Bei einer bevorzugten ersten Ausführungsform können die derzeit üblichen und am einfachsten erhältlichen Hall-Sensoren verwendet werden. Dabei ist die Leiterplatte parallel zu der zum Nutboden parallelen wandung des Gehäusevorsprungs angeordnet, und im Sensorgehäuse ist eine zweite Leiterplatte angeordnet, die wenigstens eine Signalaufbereitungs- und/oder -auswerteeinrichtung trägt, wobei die beiden Leiterplatten über wenigstens eine elektrische Leitungsanordnung miteinander verbunden sind. Während die Sensoren dadurch an der tiefsten Stelle der Führungsnut angeordnet werden können, ermöglicht die zweite Leiterplatte im übrigen, breiteren Gehäusebereich die Aufnahme der Signalaufbereitungs- und/oder - auswerteeinrichtung.

Die elektrische Leitungsanordnung zur elektrischen verbindung der beiden Leiterplatten ist zweckmäßigerweise gleichzeitig auch als die beiden Leiterplatten mechanisch miteinander verbindende Halteeinrichtung ausgebildet. Die elektrische Leitungsanordnung besteht dabei bevorzugt aus wenigstens einem Leitgummielement, das neben der elektrischen Verbindung eine elastische mechanische verbindung ermöglicht.

Viele Gehäuse von Linearantrieben besitzen zwei parallel nebeneinanderliegende Führungsnuten, die zur Aufnahme von mehreren Sensoranordnungen geeignet sind. Um Sensoren in der einen Führungsnut an Sensoren der anderen Führungsnut vorbeischieben zu können, ist der Gehäusevorsprung jeweils in vorteilhafter Weise asymmetrisch am Sensorgehäuse derart angeordnet oder angeformt, dass eine Längsseitenwandung des Gehäusevorsprungs mit einer Längsseitenwandung des Sensorgehäuses im Wesentlichen fluchtet oder einen Parallelabstand besitzt, der wesentlich kleiner als der zwischen den entsprechenden gegenüberliegenden Längsseitenwandungen ist. Dadurch können auch Sensoranordnungen mit breiteren Sensorgehäusen aneinander vorbeigeschoben werden.

In einer zweiten bevorzugten Ausführungsform ist die sich auch in das Sensorgehäuse hinein erstreckende Leiterplatte senkrecht zu der zum Nutboden parallelen Wandung des Gehäusevorsprungs angeordnet und trägt außer den Sensoren wenigstens eine Signalaufbereitungs- und/oder -auswerteeinrichtung. Bei dieser Ausführungsvariante werden sogenannte In-plane-Hall-Sensoren verwendet, also Hall-Sensoren, die senkrecht in der Führungsnut positioniert werden können, um das radiale Magnetfeld zu detektieren. Diese Ausführungsvariante hat den Vorteil, dass nur eine Leiterplatte erforderlich ist, sodass insgesamt eine geringere Baugröße realisiert werden kann. Die Signalaufbereitungs- und/oder -auswerteeinrichtung befindet sich dabei zweckmäßigerweise im größeren Gehäusebereich außerhalb der Führungsnut.

Die wenigstens die Signalaufbereitungs- und/oder -auswerteeinrichtung tragende Leiterplatte ist bevorzugt mit wenigstens einem Lichtführungselement versehen; das im Wesentlichen bis zur Gehäuse-Außenseite reicht und dort als Anzeigeelement im Bereich eines Fensters mündet. Dadurch können Anzeigeelemente an der Leiterplatte fixiert werden, sodass Leitungsverbindungen zur Gehäusewandung entfallen können, die bei einer Montage am Gehäuse erforderlich wären.

Weiterhin ist die wenigstens die Signalaufbereitungs-und/oder -auswerteeinrichtung tragende Leiterplatte mit elektrischen Leiterelementen zur elektrischen Verbindung mit einer Anschlusseinrichtung an der Gehäuse-Außenseite versehen. Diese Leiterelemente sind zweckmäßigerweise als von der Leiterplatte abstehende Leiterstifte ausgebildet.

Die wenigstens die Signalaufbereitungs- und/oder -auswerteeinrichtung tragende Leiterplatte besitzt weiterhin in vorteilhafter weise Abstützelemente zur mechanischen Abstützung am Gehäuse, sodass die Leiterplatte oder die Leiterplatten beim Einsetzen in das Sensorgehäuse automatisch korrekt positioniert und fixiert sind, wenigstens nach dem Schließen des Gehäuses. Hierzu besteht entweder das Gehäuse aus zwei miteinander verbindbaren Gehäuseteilen, und/oder es wird mit einer Vergussmasse ausgegossen.

Zum Halten des Sensorgehäuses an der Führungsnut besitzt der Gehäusevorsprung zweckmäßigerweise seitliche rippenartige Elemente zum Hintergreifen eines gegenüber dem übrigen Bereich der Führungsnut schmäleren Nuthalses. Zusätzlich können Fixierelemente, wie Schrauben, Klemmfedern oder dergleichen, vorgesehen sein.

Ausführungsbeispiele der Erfindung sind in der Zeichnung dargestellt und in der nachfolgenden Beschreibung näher erläutert. Es zeigen:
- Fig. 1: eine Positionssensoranordnung mit parallel zum Nut-boden einer Führungsnut angeordneten Hall-Sensoren in einer Querschnittsdarstellung als erstes Ausführungsbeispiel der Erfindung,
- Fig. 2: dieselbe Anordnung im Längsschnitt und
- Fig. 3: ein zweites Ausführungsbeispiel einer Positionssensoranordnung mit vertikal zum Führungsnutboden ausgerichteten Hall-Sensoren im Querschnitt.

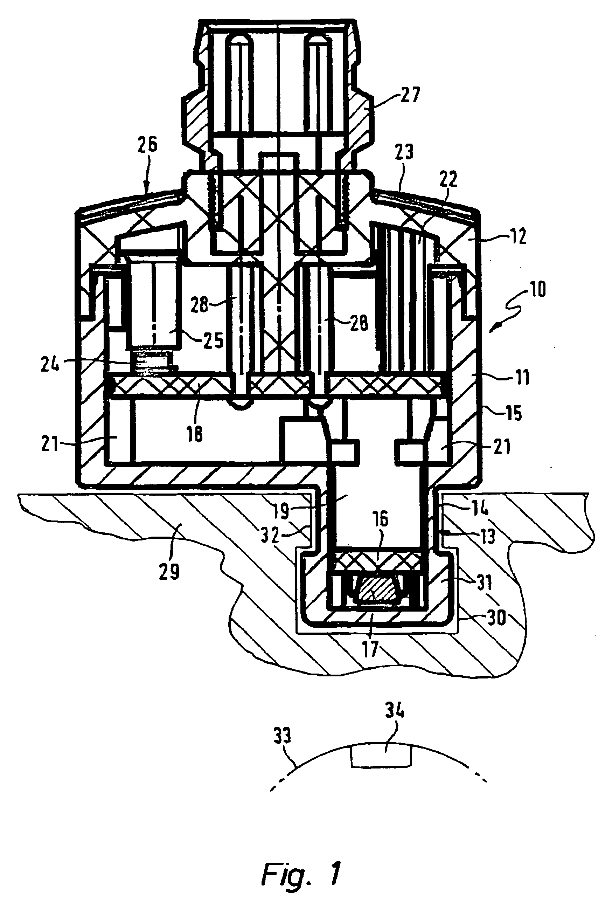

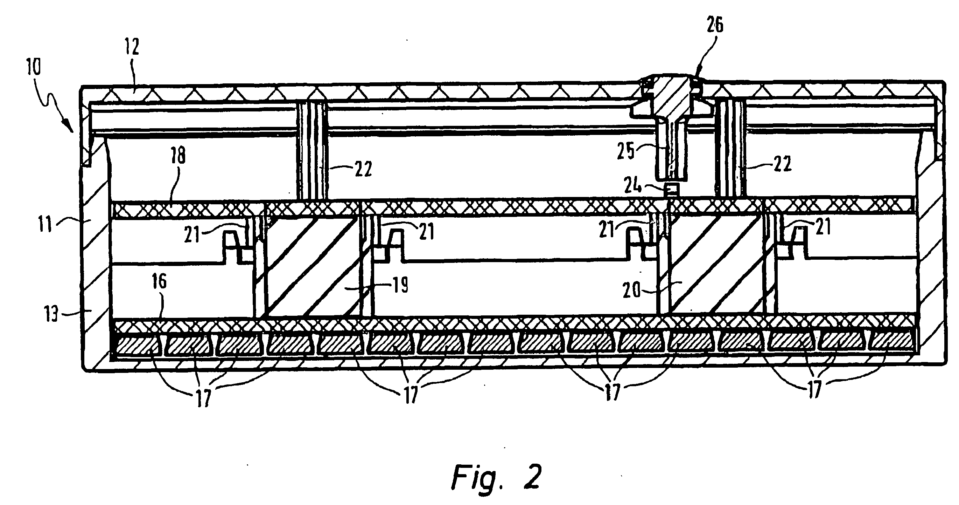

Bei dem in den Fig. 1 und 2 dargestellten ersten Ausführungsbeispiel besteht ein langgestrecktes sensorgehäuse 10 aus einem in der Darstellung unteren Hauptteil 11 und einem oberen Deckel 12, der das Hauptteil 11 dichtend abschließt und beispielsweise mit diesem verklebt, verklemmt oder verschweißt ist. Das Hauptteil 11 ist am Boden mit einem leistenartigen Gehäusevorsprung 13 versehen, der asymmetrisch seitlich zur Längsmittellinie des Gehäuses so versetzt ist, dass eine seiner Seitenwandungen 14 nahezu mit einer Seitenwandung 15 des Hauptteils 11 fluchtet bzw. lediglich geringfügig parallel versetzt ist.

Im Gehäusevorsprung 13 ist eine langgestreckte, streifen- oder leistenartige Leiterplatte 16 parallel zum Boden des Gehäusevorsprungs 13 angeordnet und trägt an seiner zu diesem Boden hinweisenden Unterseite in einer linearen Reihe angeordnete Hall-Sensoren 17. Dabei kann es sich prinzipiell auch um andere magnetfeldempfindliche Sensoren handeln. Weiterhin ist die Zahl dieser Sensoren 17 selbstverständlich nicht auf die des Ausführungsbeispiels beschränkt, sondern kann auch kleiner oder größer sein. Diese Hall-Sensoren 17 sind dadurch möglichst nahe am Boden des Gehäusevorsprungs 13 angeordnet.

Im breiteren, großvolumigeren Bereich des Hauptteils 11 ist eine zweite Leiterplatte 18 parallel zur ersten Leiterplatte 16 angeordnet und ist mit dieser über zwei Leitgummielemente 19, 20 verbunden. Neben der elektrischen Verbindung sorgen diese Leitgummielemente 19, 20 auch zur mechanischen Anbindung der ersten Leiterplatte 16 an die zweite Leiterplatte 18. Bei Bedarf kann die Zahl der Leitgummielemente 19, 20 auch größer sein oder es kann nur ein Leitgummielement vorgesehen sein, das dann die erforderliche Zahl von elektrischen Verbindungen enthalten muss.

Die zweite Leiterplatte 18 ist mit nicht dargestellten elektrischen und elektronischen Bauteilen versehen, die zusammen eine Signalaufbereitungs- und/oder -auswerteeinrichtung bilden. Die Hall-Sensoren 17 sind dabei über die Leitgummielemente 19, 20 mit dieser Signalaufbereitungs- und/oder -auswerteeinrichtung verbunden. Zur mechanischen Fixierung der zweiten Leiterplatte 18 und damit auch der ersten Leiterplatte 16 im Sensorgehäuse 10 dienen nach unten im Hauptteil 11 des Sensorgehäuses 10 angeformte Abstützelemente 21. Die Leiterplatte selbst trägt Abstützelemente 22, die sich am Deckel 12 abstützen und dort in Ausnehmungen 23 eingreifen. Die Befestigung der Abstützelemente an der Leiterplatte 18 oder am Gehäuse ist prinzipiell wählbar. Weiterhin sind auch andere Befestigungsmöglichkeiten, wie verschraubungen, Verrastungen oder dergleichen, möglich. Schließlich kann auf Abstützelemente ganz oder teilweise verzichtet werden, wenn der Innenraum des Sensorgehäuses 10 mit einer Kunststoffmasse ausgegossen wird.

Als Anzeigeelement dient eine Leuchtdiode 24 an der zweiten Leiterplatte 18, die beispielsweise zur Signalisierung des Sensorzustands dienen kann. Sie wirkt mit einem Lichtleiterelement 25 zusammen, das zwischen der Leuchtdiode 24 und einem Fenster 26 im Deckel 12 angeordnet ist. Das Lichtleiterelement 25 ist im Ausführungsbeispiel am Deckel 12 fixiert, wobei auch eine Fixierung an der Leiterplatte 18 möglich wäre. Prinzipiell können auch mehrere Leuchtdioden 24 vorgesehen sein, um unterschiedliche Sensorzustände anzuzeigen. Auch andere optische Anzeigevorrichtungen, wie kleine Displays, können vorgesehen sein. Weiterhin kann der Deckel 12 noch Bedienelemente aufweisen, die mit der zweiten Leiterplatte 18 zu deren Bedienung und/oder Einstellung elektrisch verbunden sind und die zur vereinfachung nicht dargestellt sind.

Der Deckel 12 besitzt eine elektrische Anschlussbuchse 27, an die ein Sensorkabel angeschlossen werden kann. Es kann sich dabei um einen Steck-, Schraub- oder Bajonettanschluss handeln. Zur elektrischen Verbindung mit der zweiten Leiterplatte 18 besitzt diese elektrische Anschlussstifte 28, die sich senkrecht zur Leiterplattenebene nach oben zur Anschlussbuchse 27 hin erstrecken.

Im betriebsbereiten und montierten Zustand ist das Sensorgehäuse 10 so an der Außenseite eines Linearantrieb-Gehäuses 29 angebracht, dass der leistenartige Gehäusevorsprung 13 mit den Hall-Sensoren 17 in eine sich in Längsrichtung des Linearantrieb-Gehäuses 29 erstreckende Führungsnut 30 eingreift. Die Querschnittsgestalt des Gehäusevorsprungs 13 ist dabei an die der Führungsnut 30 angepasst. Seitliche vorsprünge 31 am Gehäusevorsprung 13 hintergreifen dabei einen gegenüber dem übrigen Bereich der Führungsnut 30 schmäleren Nuthals 32, sodass das Sensorgehäuse 10 in der Führungsnut 30 gehalten wird. Ansonsten noch erforderliche Fixierelemente, wie Schrauben, Klemmfedern oder dergleichen, sind zur vereinfachung nicht dargestellt. Die asymmetrische Anordnung des Gehäusevorsprungs 13 am Hauptteil 11 ermöglicht es, dass beim Vorhandensein von zwei parallelen Führungsnuten 30 derartige Sensorgehäuse 10 in beide Nuten eingesetzt und unabhängig von Sensorgehäusen 10 in der jeweils anderen Nut verschoben werden können.

Das beschriebene Sensorgehäuse 10 bzw. die in seinem Innern enthaltene elektronische Anordnung dient zur Positionserfassung eines bewegbaren Elements 33 des Linearantriebs. Hierzu besitzt dieses bewegbare Element 33 einen Permanentmagneten 34, dessen Magnetfeld durch die Hall-Sensoren 17 erfasst wird. Bei dem bewegbaren Element 33 kann es sich beispielsweise um den Kolben eines Antriebszylinders oder ein sonstiges bewegbares mechanisches oder elektrisches Bauteil eines Linearantriebs handeln.

Die wirkungsweise der beschriebenen Positionssensoranordnung ist in der eingangs angegebenen DE 3443176 C1 detailliert beschrieben, sodass hier nur noch kurz darauf eingegangen werden muss. Jedem Hall-Sensor 17 wird bei diesem Messverfahren ein Längenwert zugeordnet, der einem Ausgangssignal des jeweiligen Sensors mit dem Wert null oder einem anderen charakteristischen Wert entspricht. Weiter werden Spannungen von benachbarten Sensoren zueinander ins Verhältnis gesetzt, und bei Bereichen bestimmter Spannungsverhältnisse werden diese Längeneinheiten zugeordnet. Bei der Bestimmung einer unbekannten Position des Permanentmagneten 34 werden die entsprechenden Spannungen der einzelnen, von diesen Permanentmagneten 34 beeinflussten Hall-Sensoren 17 gemessen und das Verhältnis benachbarter Sensorsignale gebildet, wobei die Sensoren ausgewählt werden, deren Spannungswerte jeweils durch einen Vorzeichenwechsel gekennzeichnet sind. Mittels geeigneter Interpolationsverfahren ergibt sich dadurch eine nahezu lineare positionserfassung des Permanentmagneten 34 über die Länge der Sensorreihe. Das verfahren kann dabei so modifiziert werden, dass jeweils nur die Signale derjenigen Sensoren berücksichtigt werden, die unmittelbar neben demjenigen Sensor liegen, der am stärksten auf das Magnetfeld reagiert. Die übrigen Sensoren können dabei abgeschaltet werden.

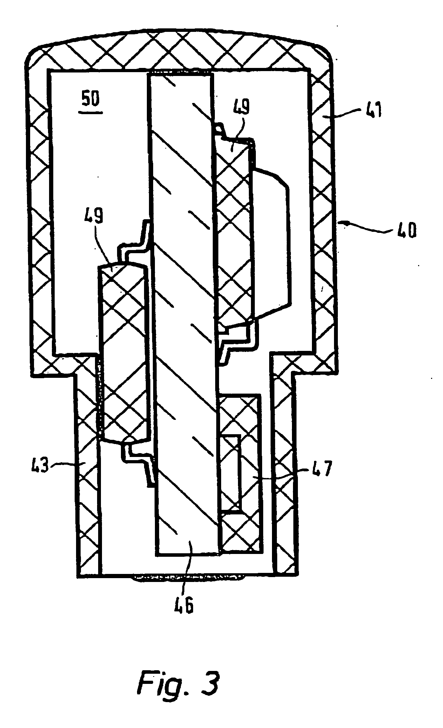

Bei der in Fig. 3 als zweites Ausführungsbeispiel dargestellten Positionssensoranordnung ist ein Sensorgehäuse 40 mit einem gegenüber dem ersten Ausführungsbeispiel kleineren Hauptteil 41 vorgesehen, an dem ein Gehäusevorsprung 43 symmetrisch angeformt ist. Dieser Gehäusevorsprung 43 greift entsprechend dem ersten Ausführungsbeispiel in die Führungsnut 30 eines Linearantrieb-Gehäuses ein. Seitliche Vorsprünge 31, die zum Halten des Sensorgehäuses 10 in der Führungsnut 30 dienen, sind nicht dargestellt, können jedoch ebenfalls in entsprechender oder ähnlicher Weise vorgesehen sein.

Beim zweiten Ausführungsbeispiel ist nur eine einzige Leiterplatte 46 vorgesehen, die sich senkrecht zur Bodenfläche des Gehäusevorsprungs 43 ausgehend von diesem sowohl durch den Gehäusevorsprung 43 als auch durch das Hauptteil 41 erstreckt. An dieser Leiterplatte 46 ist wiederum eine Reihe von Hall-Sensoren 47 so angebracht, dass sich diese im unteren leistenartigen Gehäusevorsprung 43 in einer linearen Reihe erstrecken. In der Querschnittsdarstellung gemäß Fig. 3 ist selbstverständlich nur einer dieser Hall-Sensoren 47 erkennbar. Infolge der Anordnung der Hall-Sensoren 47 senkrecht zur Bodenfläche des Gehäusevorsprungs 43 müssen In-plane-Hall-Sensoren verwendet werden, also Hall-Sensoren, die gegenüber üblichen Hall-Sensoren ein Magnetfeld in ihrer Ebene detektieren können.

Diese Anordnung der Leiterplatte 46 ermöglicht es, auch die Signalaufbereitungs- und/oder -auswerteeinrichtung auf dieser Leiterplatte 46 anzuordnen bzw. zu integrieren. Dies ist schematisch durch elektrische bzw. elektronische Bauteile 49 dargestellt.

Beim zweiten Ausführungsbeispiel ist das Sensorgehäuse 40 einstückig ohne Deckel ausgebildet. Die Leiterplatte 46 mit den sich darauf befindlichen Bauteilen wird hier im Sensorgehäuse 40 mittels einer Vergussmasse 50 vergossen. Alternativ hierzu kann selbstverständlich gemäß dem ersten Ausführungsbeispiel auch ein Gehäuse mit Deckel vorgesehen sein.

Die elektrischen Anschlüsse und eventuell vorgesehen Anzeigeelemente können gemäß dem ersten Ausführungsbeispiel ausgebildet oder separat am Sensorgehäuse 40 angebracht sein.

Die verkleinerte Bauform gemäß dem in Fig. 3 dargestellten zweiten Ausführungsbeispiel gestattet die Anbringung nicht nur in einer bei Linearantrieben üblichen Standard-T-Nut, sondern es können auch kleinere Nuten, beispielsweise auch Rundnuten, verwendet werden, wobei dann der Gehäusevorsprung 43 entsprechend ausgebildet sein muss.

Die im gleichen Abstand zueinander angeordneten Hall-Sensoren 17 bzw. 47 können in SMD-Bauweise oder in Chip-on-board-Bauweise auf der Leiterplatte angebracht sein. Dies gilt auch für die Bauteile der Signalaufbereitungs- und/oder - auswerteeinrichtung.

## Patentansprüche

1. Positionssensoranordnung mit mehreren in einer Reihe angeordneten, magnetfeldsensitiven Sensoren (17), insbesondere Hall-Sensoren, wobei ein mit einem Permanentmagneten (34) versehenes bewegbares Element (33) parallel zur Längsrichtung der Sensorreihe bewegbar ist, und wobei die Sensoren (17) an eine Signalaufbereitungs- und/oder -auswerteeinrichtung angeschlossen sind zur Erfassung der Position des bewegbaren Elements (33), **dadurch gekennzeichnet, dass** ein Sensorgehäuse (10; 40) einen leistenartigen Gehäusevorsprung (13; 43) besitzt, der zur Aufnahme in einer längs eines Linearantrieb-Gehäuses (29) verlaufenden Führungsnut (30) vorgesehen ist, dass eine langgestreckte leistenartige Leiterplatte (16; 46) in diesem Gehäusevorsprung (13; 43) in dessen Längsrichtung angeordnet ist oder in diesen eingreift und die Sensorreihe (17) in diesem Gehäusevorsprung (13; 43) hält, und dass der Permanentmagnet (34) am angetriebenen Element (33) des Linearantriebs angeordnet ist.

2. Positionssensoranordnung nach Anspruch 1, **dadurch gekennzeichnet, dass** die Leiterplatte (16) parallel zu der zum Nutboden parallelen Stirnfläche des Gehäusevorsprungs (13) angeordnet ist, dass im Sensorgehäuse (10) eine zweite Leiterplatte (18) angeordnet ist, die wenigstens eine Signalaufbereitungs- und/oder -auswerteeinrichtung trägt, und dass die beiden Leiterplatten (16, 18) über wenigstens eine elektrische Leitungsanordnung (19, 20) miteinander verbunden sind.

3. Positionssensoranordnung nach Anspruch 2, **dadurch gekennzeichnet, dass** die elektrische Leitungsanordnung (19, 20) auch als die beiden Leiterplatten (16, 18) mechanisch miteinander verbindende Halteeinrichtung ausgebildet ist.

4. Positionssensoranordnung nach Anspruch 2 oder 3, **dadurch gekennzeichnet, dass** die elektrische Leitungsanordnung (19, 20) aus wenigstens einem Leitgummielement besteht.

5. Positionssensoranordnung nach einem der Ansprüche 2 bis 4, **dadurch gekennzeichnet, dass** der Gehäusevorsprung (13) asymmetrisch am Sensorgehäuse (10) derart angeordnet oder angeformt ist, dass eine Längsseitenwandung (14) des Gehäusevorsprungs (13) mit einer Längsseitenwandung (15) des Sensorgehäuses (10) im Wesentlichen fluchtet oder einen Parallelabstand besitzt, der wesentlich kleiner als der zwischen den entsprechenden gegenüberliegenden Längsseitenwandungen ist.

6. Positionssensoranordnung nach Anspruch 1, **dadurch gekennzeichnet, dass** die sich auch in das Sensorgehäuse (40) hinein erstreckende Leiterplatte (46) senkrecht zu der zum Nutboden parallelen Stirnfläche des Gehäusevorsprungs (43) angeordnet ist und außer den Sensoren (47) wenigstens eine Signalaufbereitungs- und/oder -auswerteeinrichtung (49) trägt.

7. Positionssensoranordnung nach Anspruch 6, **dadurch gekennzeichnet, dass** sich die Signalaufbereitungs- und/oder -auswerteeinrichtung (49) im Wesentlichen im Sensorgehäuse (40) befindet.

8. Positionssensoranordnung nach einem der vorhergehenden Ansprüche, **dadurch gekennzeichnet, dass** die wenigstens die Signalaufbereitungs- und/oder -auswerteeinrichtung tragende Leiterplatte (18) mit wenigstens einem Anzeigeelement (24) versehen ist, das mit wenigstens einem Lichtführungselement (25) in Wirkverbindung steht, welches im Wesentlichen bis zur Gehäuse-Außenseite reicht und dort zur optischen Signalanzeige im Bereich eines Fensters (26) mündet.

9. Positionssensoranordnung nach einem der vorhergehenden Ansprüche, **dadurch gekennzeichnet, dass** die wenigstens die Signalaufbereitungs- und/oder -auswerteeinrichtung tragende Leiterplatte (18) mit wenigstens einem Bedienelement am Sensorgehäuse verbunden ist.

10. Positionssensoranordnung nach einem der vorhergehenden Ansprüche, **dadurch gekennzeichnet, dass** die wenigstens die Signalaufbereitungs- und/oder -auswerteeinrichtung tragende Leiterplatte (18) mit elektrischen Leiterelementen (28) zur elektrischen verbindung mit einer Anschlusseinrichtung (27) an der Gehäuse-Außenseite versehen ist.

11. Positionssensoranordnung nach Anspruch 10, **dadurch gekennzeichnet, dass** die Leiterelemente (28) als von der Leiterplatte (18) abstehende Leiterstifte ausgebildet sind.

12. Positionssensoranordnung nach einem der vorhergehenden Ansprüche, **dadurch gekennzeichnet, dass** wenigstens die die Signalaufbereitungs- und/oder -auswerteeinrichtung tragende Leiterplatte (18) mit Abstützelementen (22) zur mechanischen Abstützung am Sensorgehäuse (10) versehen ist.

13. Positionssensoranordnung nach einem der vorhergehenden Ansprüche, **dadurch gekennzeichnet, dass** das Sensorgehäuse (10) aus zwei miteinander verbundenen Gehäuseteilen (11, 12) besteht und/oder mit einer vergussmasse (50) ausgegossen ist.

14. Positionssensoranordnung nach einem der vorhergehenden Ansprüche, **dadurch gekennzeichnet, dass** der Gehäusevorsprung (13) seitliche rippenartige Elemente (31) zum Hintergreifen eines gegenüber dem übrigen Bereich der Führungsnut (30) schmäleren Nuthalses (32) besitzt.

## Claims

1. Position sensor assembly with a plurality of sensors (17), in particular Hall sensors, sensitive to magnetic fields arranged in a row, wherein a movable element (33) provided with a permanent magnet (34) is movable parallel to the longitudinal direction of the row of sensors and wherein the sensors (17) are connected to a signal conditioning and/or evaluation device to detect the position of the movable element (33), **characterised in that** a sensor housing (10; 40) features a strip-like housing projection (13; 43) for the accommodation of a guide groove (30) running along a linear drive housing (29), **in that** an oblong, strip-like printed circuit board (16; 46) is located in said housing projection (13; 43) in its longitudinal direction or in engagement therewith and holds the row of sensors (17) in said housing projection (13; 43), and **in that** the permanent magnet (34) is located on the driven element (33) of the linear drive.

2. Position sensor assembly according to claim 1, **characterised in that** the printed circuit board (16) is arranged parallel to that end face of the housing projection (13) which is parallel to bottom of the groove, **in that** a second printed circuit board (18) supporting the at least one signal conditioning and/or evaluation device is provided in the sensor housing (10), and **in that** the two printed circuit boards (16, 18) are connected to one another by at least one electric line arrangement (19, 20).

3. Position sensor assembly according to claim 2, **characterised in that** the electric line arrangement (19, 20) is simultaneously designed as a mechanical retaining device joining the two printed circuit boards (16, 18) to one another.

4. Position sensor assembly according to claim 2 or 3, **characterised in that** the electric line arrangement (19, 20) comprises at least one conductive rubber element.

5. Position sensor assembly according to any of claims 2 to 4, **characterised in that** the housing projection (13) is asymmetrically located on or integral with the sensor housing (10), so that a longitudinal side wall (14) of the housing projection (13) is substantially in alignment with a longitudinal side wall (15) of the sensor housing (10) or has a parallel spacing significantly smaller than that between the corresponding opposite longitudinal side walls.

6. Position sensor assembly according to claim 1, **characterised in that** the printed circuit board (46) extending into the sensor housing (40) is arranged at right angles to the end face of the housing projection (43) which is parallel to the bottom of the groove and, in addition to the sensors (47), supports at least one signal conditioning and/or evaluation device (49).

7. Position sensor assembly according to claim 6, **characterised in that** the signal conditioning and/or evaluation device (49) is substantially located within the sensor housing (40).

8. Position sensor assembly according to any of the preceding claims, **characterised in that** the printed circuit board (18) supporting the at least one signal conditioning and/or evaluation device is provided with at least one indicating element (24) in effective connection with at least one light-guiding element (25) substantially extending to the outside of the housing and there terminating in the area of a window (26) for optical signal display.

9. Position sensor assembly according to any of the preceding claims, **characterised in that** the printed circuit board (18) supporting the at least one signal conditioning and/or evaluation device is connected to at least one control element on the sensor housing.

10. Position sensor assembly according to any of the preceding claims, **characterised in that** the printed circuit board (18) supporting the at least one signal conditioning and/or evaluation device is provided with electric conductor elements (28) for electric connection to a connecting device (27) on the outside of the housing.

11. Position sensor assembly according to claim 10, **characterised in that** the conductor elements (28) are designed as conductor pins projecting from the printed circuit board (18).

12. Position sensor assembly according to any of the preceding claims, **characterised in that** the printed circuit board (18) supporting the at least one signal conditioning and/or evaluation device is provided with supporting elements (22) for mechanical support on the sensor housing (10).

13. Position sensor assembly according to any of the preceding claims, **characterised in that** the sensor housing (10) comprises two housing parts (11, 12) joined to one another and/or is filled with a potting compound (50).

14. Position sensor assembly according to any of the preceding claims, **characterised in that** the housing projection (13) is provided with lateral rib-like elements (31) for engaging a groove neck (32) narrower than the rest of the guide groove (30) from behind.

## Revendications

1. Ensemble de capteurs de position comportant plusieurs capteurs (17) sensibles au champ magnétique, en particulier des capteurs Hall, montés en une rangée, un élément (33) mobile, muni d'un aimant permanent (34), pouvant être déplacé parallèlement à la direction longitudinale de la rangée de capteurs, et les capteurs (17) étant raccordés à un dispositif de traitement et/ou d'analyse des signaux en vue de détecter la position de l'élément (33) mobile, **caractérisé en ce qu'**un boîtier pour capteurs (10 ; 40) comporte une saillie (13 ; 43) en forme de baguette, qui est destinée à être logée dans une rainure de guidage (30), qui s'étend le long d'un carter (29) d'un entraînement linéaire, **en ce qu'**un circuit imprimé (16 ; 46) en forme de baguette allongée est disposée dans ladite saillie du boîtier (13 ; 43) dans le sens longitudinal de celle-ci ou s'engage dans celle-ci et maintient la rangée de capteurs (17) dans cette saillie du boîtier (13 ; 43), et **en ce que** l'aimant permanent (34) est disposé sur l'élément (33) entraîné de l'entraînement linéaire.

2. Ensemble de capteurs de position selon la revendication 1, **caractérisé en ce que** le circuit imprimé (16) est agencé parallèlement à la face frontale, parallèle au fond de la rainure, de la saillie du boîtier (13), **en ce que** dans le boîtier pour capteurs (10) est disposée un deuxième circuit imprimé (18) qui porte au moins un dispositif de traitement et d'analyse des signaux, et **en ce que** les deux circuit imprimés (16, 18) sont assemblées l'un à l'autre par l'intermédiaire d'au moins un dispositif conducteur (19, 20) électrique.

3. Ensemble de capteurs de position selon la revendication 2, **caractérisé en ce que** le dispositif conducteur (19, 20) électrique est réalisé sous la forme d'un dispositif de fixation reliant mécaniquement les deux plaquettes de circuits imprimés (16, 18) l'une à l'autre.

4. Ensemble de capteurs de position selon la revendication 2 ou 3, **caractérisé en ce que** le dispositif conducteur (19, 20) électrique est formé par au moins un élément en caoutchouc conducteur.

5. Ensemble de capteurs de position selon l'une quelconque des revendications 2 à 4, **caractérisé en ce que** la saillie du boîtier (13) est montée ou formée de manière asymétrique contre le boîtier pour capteurs (10), de telle sorte qu'une paroi latérale longitudinale (14) de la saillie du boîtier (13) est sensiblement alignée avec une paroi latérale longitudinale (15) du boîtier pour capteurs (10) ou est située à distance parallèlement de celle-ci, laquelle distance est nettement inférieure à celle entre les parois latérales longitudinales face à face correspondantes.

6. Ensemble de capteurs de position selon la revendication 1, **caractérisé en ce que** la plaquette de circuits imprimés (46), qui s'étend également vers l'intérieur du boîtier pour capteurs (40), est disposée perpendiculairement à la face frontale, parallèle au fond de la rainure, de la saillie du boîtier (43) et porte, outre les capteurs (47), au moins un dispositif de traitement et d'analyse des signaux (49).

7. Ensemble de capteurs de position selon la revendication 6, **caractérisé en ce que** le dispositif de traitement et d'analyse des signaux (49) est sensiblement situé à l'intérieur du boîtier pour capteurs (40).

8. Ensemble de capteurs de position selon l'une quelconque des revendications précédentes, **caractérisé en ce que** ledit au moins un circuit imprimé (18) portant le dispositif de traitement et/ou d'analyse des signaux est muni d'au moins un élément de signalisation (24), qui est en liaison active avec au moins un élément de guidage de lumière (25) qui s'étend sensiblement jusqu'à la face extérieure du boîtier et débouche dans celle-ci dans la zone d'une fenêtre (26) en vue d'une signalisation optique.

9. Ensemble de capteurs de position selon l'une quelconque des revendications précédentes, **caractérisé en ce que** ledit au moins un circuit imprimé (18) portant le dispositif de traitement et/ou d'analyse des signaux est reliée à un élément de commande sur le boîtier pour capteurs.

10. Ensemble de capteurs de position selon l'une quelconque des revendications précédentes, **caractérisé en ce que** ledit au moins un circuit imprimé (18) portant le dispositif de traitement et/ou d'analyse des signaux est munie d'éléments conducteurs (28) électriques pour une liaison électrique avec un dispositif de raccordement (27) sur la face extérieure du boîtier.

11. Ensemble de capteurs de position selon la revendication 10, **caractérisé en ce que** les éléments conducteurs (28) sont réalisés sous forme de plots conducteurs en saillie sur le circuit imprimé (18).

12. Ensemble de capteurs de position selon l'une quelconque des revendications précédentes, **caractérisé en ce que** ledit au moins un circuit imprimé (18) portant le dispositif de traitement et/ou d'analyse des signaux est muni d'éléments d'appui (22) pour l'appui mécanique contre le boîtier pour capteurs (10).

13. Ensemble de capteurs de position selon l'une quelconque des revendications précédentes, **caractérisé en ce que** le boîtier pour capteurs (10) est formé par deux parties de boîtier (11, 12) reliées l'une à l'autre et/ou est comblé par un produit de scellement (50).

14. Ensemble de capteurs de position selon l'une quelconque des revendications précédentes, **caractérisé en ce que** la saillie du boîtier (13) comporte des éléments (31) latéraux en forme de nervures, destinés à s'engager derrière un goulot (32) de la rainure, plus étroit que la zone restante de la rainure de guidage (30).
